# EUROPEAN PATENT SPECIFICATION

(11) **EP 2 336 698 B1**
(45) Date of publication and mention of the grant of the patent: **04.05.2016**
(21) Application number: 09179430.5
(22) Date of filing: 16.12.2009
(51) Int. Cl.: F28D 9/00

(54) **Plate-type heat exchanger with reinforcement insert piece**
Plattenwärmeaustauscher mit Verstärkungseinsatzteil
Échangeur de chaleur de type plaque avec pièce d'insert de renforcement

(43) Date of publication of application: 22.06.2011
(73) Proprietor: MAHLE International GmbH, 70376 Stuttgart (DE)
(72) Inventor: Berger, Thierry, 57100, Elange (FR); Puillandre, Youen, 54780, Ugny (FR)
(74) Representative: BRP Renaud & Partner mbB Rechtsanwälte Patentanwälte Steuerberater

(56) References cited:
- EP-A1- 1 083 398
- EP-A1- 1 739 380
- EP-A1- 1 830 048
- DE-A1-102005 050 738
- FR-A1- 2 010 517
- GB-A- 654 395
- JP-A- 8 082 496
- JP-A- 9 113 171
- JP-A- 2000 266 479
- US-A- 5 400 854
- US-A1- 2005 098 308

## Description

### TECHNICAL FIELD

The present invention relates to a heat exchanger assembly such as a liquid cooled charge air cooler for an internal combustion engine of an automotive vehicle, comprising the features of the preamble of claim 1.

### BACKGROUND OF THE INVENTION

A heat exchanger of this type is known from DE 10 2005 030 738 A1. From EP 1 679 380 A1 a heat exchanger is known, said heat exchanger comprising separate insert pieces which are arranged either around an inlet portion or around an outlet portion.

A heat exchanger in general exchanges heat between a cooling fluid and air. A stack of virtually identical plates are positioned symmetrically in pairs having mating edges and a concave region delimited by the edges to define a fluid passage. The plates have tubular projections defining an inlet for entering fluid to the passage and an outlet for exiting fluid from the passage to thereby establish a direction of fluid flow. Each inlet is connected to the outlet of the preceding pair of plates and each outlet is connected to the inlet of the next pair of plates. Actually, each pair of plates includes a central rib to define a U-shaped passage having a fluid entering leg and a fluid exiting leg interconnected by an open bottom. Examples of such heat exchangers are described in U.S. Pat. No. 5,111,878 to Kadle and U.S. Pat. No. 5,409,056 to Farry, Jr. et al. as well as in U.S. Pat Application No. 2007/0044946 to Mehendale et al..

Hot and humid air flows between the consecutive pairs of plates. The plates are usually stamped of thin gauge metal and a plurality of dimples is stamped into the plates to project into the passage to interact with fluid flow through the passage. These dimples can be identical in shape, position and orientation or they can be of various shapes as illustrated in U.S. Pat. No. 6,289,982 to Naji. They project into the interior of the passage formed by the pairs of plates and thus allow better heat exchange by agitating the cooling fluid flow, and especially by promoting its movement in a turbulent flow.

The stack of plates forming the heat exchanger assembly usually comprises a pair of end plates which are fixed together and which are fixed to a flat fixation plate arranged at one end of the assembly. Said pair of end plates defines an inlet and an outlet tubular portions to be connected with the inlet and outlet of the other plates, on one side, and to an inlet and outlet connecting pipes, on the other side. Said inlet and outlet tubular portions are formed of tubular projections, or half tubes, which are connected to each other as for the other plates of the stack.

Current Liquid Cooled Charge Air Coolers (LCCAC) show typical failure mode located between the half tubes of the two end plates, near the fixation plate. The failure is mainly due to a combination of vibration, thermal shock and pressure cycles during engine driving.

### SUMMARY OF THE INVENTION

The present invention aims at solving the above mentioned issue by providing a heat exchanger which is more robust.

The present invention proposes a plate type heat exchanger, particularly a liquid cooled charge air cooler for an internal combustion engine, comprising a stack of pairs of plates, each pair of plates having mating edges and a concave region delimited by said edges to define a fluid passage between said pair of plates, said plates having tubular projections defining an inlet for entering fluid to said passage and an outlet for exiting fluid from said passage to thereby establish a direction of fluid flow, said stack having a pair of end plates which are fixed together, said pair of end plates defining an inlet and an outlet tubular portions to be connected with the inlet and outlet of the other plates, on one side, and to an inlet and outlet connecting pipes, on the other side, characterized in that at least one insert piece is arranged between the two end plates, around the inlet and outlet tubular portions, in order to reinforce the assembly of the two end plates in the region of inlet/outlet connection.

Thanks to the reinforcing insert piece, the end plates assembly is provided with a reinforcing profile which allows tying the end plates together.

According to the invention:
- each inlet/outlet tubular portion is provided with an insert piece, each insert piece encircling one inlet/outlet tubular portion;
- each insert piece encircles both the inlet and the outlet tubular portions.

According to other advantageous features of the invention:
- said end plates have tubular projections defining said inlet and outlet tubular portions, and said insert piece is annular and is connected to both end plates in sealing tight manner;
- said insert piece is rolled formed;
- it comprises at least two insert pieces, a first insert piece being fixed to a first end plate and a second insert piece being fixed to a second end plate in a sealing tight manner, said insert pieces being connected to each other in a sealing tight manner;
- each insert piece has an inlet and an outlet connecting portions, said inlet connecting portion encircling said inlet tubular portion and said outlet connecting portion encircling said outlet tubular portion;
- each insert piece is fitted to an axial projection of the corresponding end plate;
- said axial projection is not in contact with the opposite end plate.

When the insert is made of one piece with end plates not modified, the insert provides reinforcement where the stamping process has created weakness, i.e. the thin out portion at the basis of the tubular projection. Regular plates can be used since their weakness can be compensated. Additionally, the insert piece increases the brazing surface between the parts which provides more strength to the assembly.

When the heat exchanger uses two insert pieces which are tied to each other, it allows modifying the tubular projections to prevent weaknesses in the end plates. The insert pieces form thicker and stronger tubular portions, or caps, and it also increase the brazing surface. It also provides for relief of the stress in the radius region of the inlet/outlet connection.

### BRIEF DESCRIPTION OF THE DRAWINGS

The present invention is now described by way of example with reference to the accompanying drawings in which:
- figure 1 is a perspective view showing schematically a plate type heat exchanger;
- figure 2 is a perspective view showing the end plates assembly with the connecting pipes of the heat exchanger of figure 1;
- figure 3 is a cross section view showing schematically the end plates assembly with an insert piece according to a first embodiment of the present invention;
- figure 4 is a partial perspective view showing the end plates assembly of figure 3;
- figure 5 is a perspective view showing the insert piece of figure 3;
- figure 6 is an exploded perspective view showing schematically the end plates assembly with two insert pieces according to a second embodiment of the present invention;
- figure 7 is a perspective view showing the end plates assembly of figure 6;
- figure 8 is a cross section view similar to the view of figure 3 showing the end plates assembly of figure 6.

### DESCRIPTION OF THE PREFERRED EMBODIMENTS

A plate type heat exchanger assembly 10 constituted of a liquid cooled charge air cooler is variously shown in the figures. It comprises a stack 12 of pairs 14 of plates 16 and two end plates 20, 22 which is positioned against an essentially flat fixation plate 24.

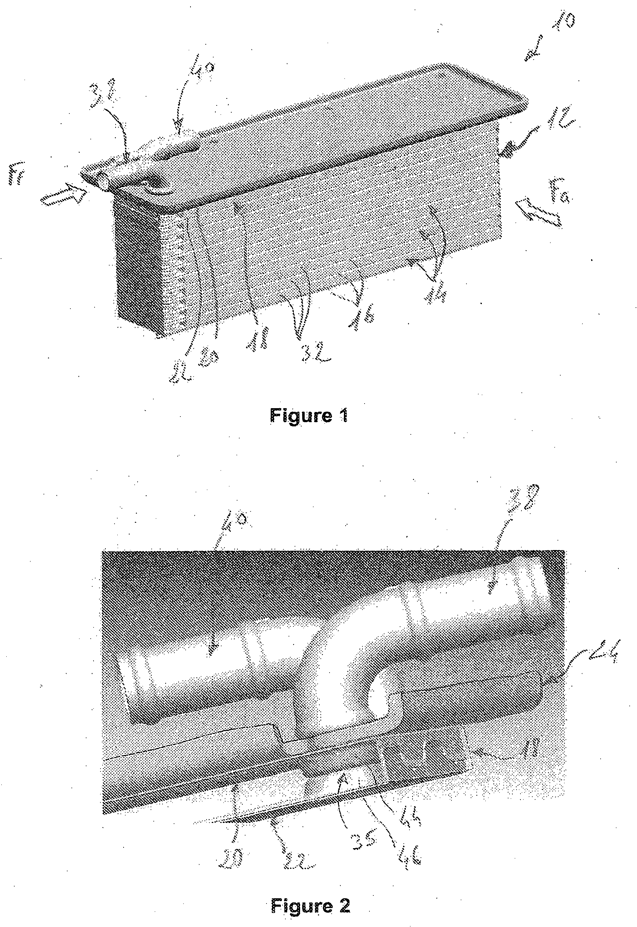

On figures 2 to 8, only the pair 18 of end plates 20, 22 has been represented and will be described in details. A more detailed description of the other pairs 14 of regular plates 16 can be found in document US 2007/0044946.

The plates 16, 20, 22 are substantially identical and disposed in mirror relationship to one another, and fixed to each other. The plates 16, 20, 22 have mating edges 26 and a concave region delimited by the edges 26 to define a fluid passage 28.

The assembly includes a plurality of pairs 14 of the plates 16 for fluid flow from a pass through one pair of plates to a pass through the next pair of plates. Each pair of plates includes a central rib 30 to define a U-shaped passage 28 having a fluid entering leg and a fluid exiting leg interconnected by an open bottom interconnecting the legs below the lower end of the engaging central ribs 30. The plates 16 have tubular projections defining an inlet for entering fluid to the passage 28 and an outlet for exiting fluid from the passage 28 to thereby establish a direction of fluid flow.

As is well known, the heat exchanger assembly normally includes air-fins 32 disposed between adjacent pairs 14, 18 of plates 16, 20, 22 for enhancing heat exchange between air flowing, as shown by the air flow arrow Fa in figure 1, through the air-fins 32 and fluid flow through the passage 28 defined by said pairs 14, 20 of plates 16, 20, 22.

A plurality of dimples 34 projects into the passage 28 to interact with fluid flow through the passage 28.

The pair 18 of end plates 20, 22 defines an inlet 35 and an outlet 36 tubular portions to be connected with the inlet and outlet of the other plates 16, on one side, and to an inlet 38 and outlet 40 connecting pipes, on the other side. The fluid enters into the heat exchanger 10 through the inlet connecting pipe 38 as shown by the arrow Ff.

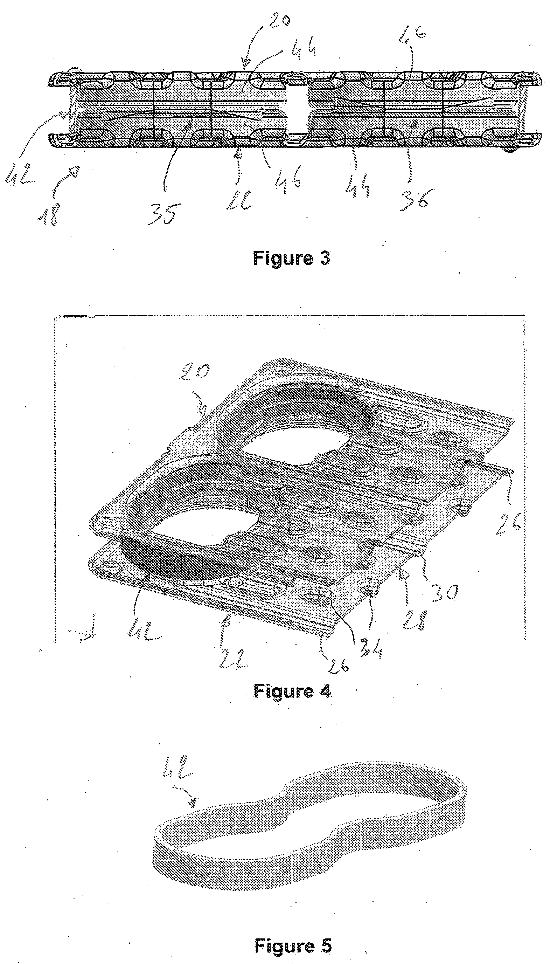

According to a first embodiment of the present invention, as shown more particularly on figures 3 to 5, an insert piece 42 is arranged between the two end plates 20, 22, around the inlet 35 and outlet 36 tubular portions, in order to reinforce the assembly of the two end plates 20, 22 in the region of inlet/outlet connection.

According to the embodiment shown, the inlet and outlet tubular portions 35, 36 are constituted of mating tubular projections 44, 46 substantially identical to the tubular projections of the regular plates 16. Preferably, the insert piece 42 encircles both the inlet 35 and the outlet 36 tubular portions. Said insert piece 42 is annular and is connected to both end plates 20, 22 in a sealing tight manner, for example by brazing.

Advantageously, the insert piece 42 is rolled formed, as shown on figure 5 and has a shape fitting with the section shape of the tubular portions 35, 36. The insert piece 42 can be made from a strip of metal.

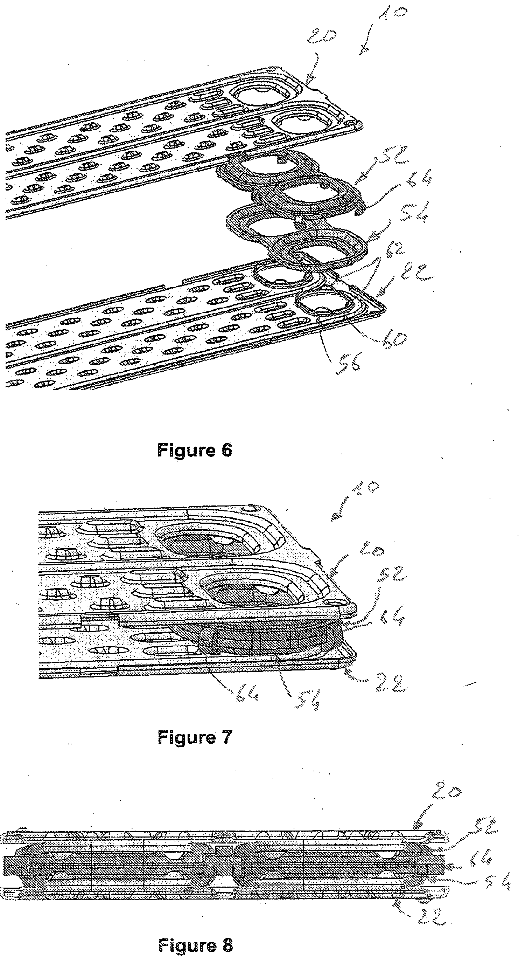

According to a second embodiment of the present invention, which is shown on figures 6 to 8, the pair 16 of end plates 20, 22 could be provided with two insert pieces 52, 54; a first insert piece 52 being fixed to a first end plate 20 and a second insert piece 54 being fixed to a second end plate 22 in a sealing tight 5 manner, said insert pieces 52, 54 being also connected to each other in a sealing tight manner.

According to this embodiment, each insert piece 52, 54 has an inlet and an outlet connecting portions, said inlet connecting portion encircling said inlet tubular portion 35 and said outlet connecting portion encircling said outlet tubular portion 36.

Preferably, each insert piece 52, 54 is fitted to an axial projection 56 of the corresponding end plate 20, 22. The axial projection 56 can be made different from the axial projections mentioned in connection with the first embodiment. More particularly, as shown on figures 6 to 8, the axial projection 56 is made of a thin tubular portion 60 and of several axial lugs 62 which help positioning of the corresponding insert piece 52, 54 but which has no direct fluid connecting function as the axial projection 56 is not in contact with the opposite end plate 20, 22.

According to the embodiment shown, one of the two insert pieces 52, 54 is provided with attaching lugs 64 configured for attachment with the opposite insert piece 54 before brazing.

## Claims

1. A plate type heat exchanger (10), particularly a liquid cooled charge air cooler for an internal combustion engine,
comprising a stack (12) of plates (16, 20, 22) defining several pairs (14) of plates (16) and two end plates (20, 22),
further comprising an essentially flat fixation plate (24) against which said stack (12) is positioned,
further comprising an inlet connecting pipe (38) and an outlet connecting pipe (40) which are arranged at the fixation plate (24) at a side turned away from the stack (12),
wherein the plates (16) of each pair (14) of plates (16) have mating edges (26) and a concave region delimited by said edges (26) to define a fluid passage (28) between said pair (14) of plates (16),
wherein said plates (16) have tubular projections defining an inlet for entering fluid to said fluid passage (28) and an outlet for exiting fluid from said fluid passage (28) to thereby establish a direction of fluid flow,
wherein the one end plate (20) is positioned against said fixation plate (24), while the other end plate (22) is also a plate (16) of that pair (14) of plates (16) which is adjacent to the fixation plate (24), and
wherein the end plates (20, 22) are fixed together and define an inlet tubular portion (35) and an outlet tubular portion (36) which are to be connected with the inlet and outlet of the other plates (16), on one side, and to the inlet and outlet connecting pipes (38, 40), on the other side,
**characterized in**
**that** at least one insert piece (42, 52, 54) is arranged between the two end plates (20, 22), around the inlet and outlet tubular portions (35, 36), in order to reinforce the assembly of the two end plates (20, 22) in the region of inlet/outlet connection, and
**that** each insert piece (42, 52, 54) encircles both the inlet and the outlet tubular portions (35, 36).

2. Heat exchanger (10) according to claim 1, **characterized in that** said end plates (20, 22) have tubular projections (44, 46) defining said inlet and outlet tubular portions (35, 36), and **in that** said insert piece (42) is annular and is connected to both end plates (20, 22) in a sealing tight manner.

3. Heat exchanger (10) according to the preceding claim, **characterized in that** said insert piece (42) is rolled formed.

4. Heat exchanger (10) according to claim 1, **characterized in that** it comprises at least two insert pieces (52, 54), a first insert piece (52) being fixed to a first end plate (20) and a second insert piece (54) being fixed to a second end plate (22) in a sealing tight manner, said insert pieces (52, 54) being connected to each other in a sealing tight manner.

5. Heat exchanger (10) according to claim 4, **characterized in that** each insert piece (52, 54) has an inlet and an outlet connecting portions, said inlet connecting portion encircling said inlet tubular portion (35) and said outlet connecting portion encircling said outlet tubular portion (36).

6. Heat exchanger (10) according to claim 4 or 5, **characterized in that** each insert piece (52, 54) is fitted to an axial projection (56) of the corresponding end plate (20, 22).

7. Heat exchanger (10) according to claim 6, **characterized in that** said axial projection (56) is not in contact with the opposite end plate (20, 22).

## Patentansprüche

1. Wärmetauscher (10) vom Plattentyp, insbesondere ein flüssigkeitsgekühlter Ladeluftkühler für eine Verbrennungskraftmaschine,
umfassend einen Stapel (12) von Platten (16, 20, 22), der mehrere Paare (14) von Platten (16) und zwei Endplatten (20, 22) definiert,
ferner umfassend eine im Wesentlichen flache Fixierungsplatte (24), gegen die der Stapel (12) positioniert ist,
ferner umfassend ein Einlass-Verbindungsrohr (38) und ein Auslass-Verbindungsrohr (40), die an der Fixierungsplatte (24) an einer von dem Stapel (12) abgewendeten Seite angeordnet sind,
wobei die Platten (16) jedes Paares (14) von Platten (16) zusammenpassende Kanten (26) und einen durch die Kanten (26) begrenzten konkaven Bereich aufweisen, um einen Fluiddurchgang (28) zwischen dem Paar (14) von Platten (16) zu definieren,
wobei die Platten (16) röhrenförmige Vorsprünge aufweisen, die einen Einlass zum Einleiten von Fluid zu dem Fluiddurchgang (28) und einen Auslass zum Ausleiten von Fluid aus dem Fluiddurchgang (28) definieren, um dadurch eine Richtung des Fluidstroms einzurichten,
wobei die eine Endplatte (20) gegen die Fixierungsplatte (24) positioniert ist, während die andere Endplatte (22) ebenfalls eine Platte (16) dieses Paares (14) von Platten (16) ist, die der Fixierungsplatte (24) benachbart ist, und
wobei die Endplatten (20, 22) aneinander befestigt sind und einen Einlass-Rohrabschnitt (35) und einen Auslass-Rohrabschnitt (36) definieren, die mit dem Einlass und dem Auslass der anderen Platten (16), auf der einen Seite, und mit dem Einlass und dem Auslass-Verbindungsrohr (38, 40), auf der anderen Seite, verbunden werden sollen,
**dadurch gekennzeichnet,**
**dass** wenigstens ein Einsatzstück (42, 52, 54) zwischen den zwei Endplatten (20, 22), um den Einlass- und den Auslass-Rohrabschnitt (35, 36) angeordnet ist, um die Baugruppe der zwei Endplatten (20, 22) in dem Bereich der Einlass-/Auslassverbindung zu verstärken, und dass jedes Einsatzstück (42, 52, 54) sowohl den Einlass- als auch den Auslass-Rohrabschnitt (35, 36) umschließt.

2. Wärmetauscher (10) nach Anspruch 1, **dadurch gekennzeichnet, dass** die Endplatten (20, 22) röhrenförmige Vorsprünge (44, 46) aufweisen, die den Einlass- und den Auslass-Rohrabschnitt (35, 36) definieren, und dadurch, dass das Einsatzstück (42) ringförmig ist und auf eine abdichtende enge Weise mit den beiden Endplatten (20, 22) verbunden ist.

3. Wärmetauscher (10) nach dem vorhergehenden Anspruch, **dadurch gekennzeichnet, dass** das Einsatzstück (42) profilgewalzt ist.

4. Wärmetauscher (10) nach Anspruch 1, **dadurch gekennzeichnet, dass** er wenigstens zwei Einsatzstücke (52, 54) umfasst, ein erstes Einsatzstück (52), das an einer ersten Endplatte (20) befestigt ist, und ein zweites Einsatzstück (54), das an einer zweiten Endplatte (22) befestigt ist, auf eine abdichtende enge Weise, wobei die Einsatzstücke (52, 54) auf eine abdichtende enge Weise miteinander verbunden sind.

5. Wärmetauscher (10) nach Anspruch 4, **dadurch gekennzeichnet, dass** jedes Einsatzstück (52, 54) einen Einlass- und einen Auslass-Verbindungsabschnitt aufweist, wobei der Einlass-Verbindungsabschnitt den Einlass-Rohrabschnitt (35) umschließt und der Auslass-Verbindungsabschnitt den Auslass-Rohrabschnitt (36) umschließt.

6. Wärmetauscher (10) nach Anspruch 4 oder 5, **dadurch gekennzeichnet, dass** jedes Einsatzstück (52, 54) an einem axialen Vorsprung (56) der entsprechenden Endplatte (20, 22) befestigt ist.

7. Wärmetauscher (10) nach Anspruch 6, **dadurch gekennzeichnet, dass** sich der axiale Vorsprung (56) nicht in Berührung mit der gegenüberliegenden Endplatte (20, 22) befindet.

## Revendications

1. Échangeur thermique du type à plaques (10), notamment un refroidisseur d'air de charge refroidi par liquide pour un moteur à combustion interne,
comprenant une pile (12) de plaques (16, 20, 22) définissant plusieurs paires de plaques (14) et deux plaques (16) d'extrémité (20, 22),
comprenant en outre une plaque de fixation essentiellement plate (24) contre laquelle ladite (12) pile est positionnée,
comprenant en outre un tuyau de raccordement d'entrée (38) et un tuyau de raccordement de sortie (40) qui sont disposés au niveau de la plaque de fixation (24) au niveau d'un côté qui se détourne de la pile (12),
dans lequel les plaques (16) de chaque paire (14) de plaques (16) ont des bords qui s'emboîtent (26) et une région concave délimitée par lesdits bords (26) afin de définir un passage de fluide (28) entre ladite paire (14) de plaques (16),
dans lequel lesdites plaques (16) ont des protubérances tubulaires définissant une entrée pour l'entrée du fluide dans ledit passage de fluide(28) et une sortie pour faire ressortir le fluide dudit passage du fluide (28) afin d'établir ainsi une direction d'écoulement de fluide,
dans lequel la plaque d'extrémité (20) est positionnée contre ladite plaque de fixation (24), alors que l'autre plaque d'extrémité (22) est aussi une plaque (16) de cette paire (14) de plaques (16) qui est adjacente à la plaque de fixation (24), et
dans lequel les plaques d'extrémité (20, 22) sont fixées l'une à l'autre et définissent une portion tubulaire d'entrée (35) et une portion tubulaire de sortie (36) qui doivent être raccordées à l'entrée et à la sortie des autres plaques (16), sur un côté, et aux tuyaux de raccordement d'entrée et de sortie (38, 40), sur l'autre côté,
**caractérisé en ce que**
au moins une pièce d'insert (42, 52, 54) est disposée entre les deux plaques d'extrémité (20, 22), autour des portions tubulaires d'entrée et de sortie (35, 36), de manière à renforcer l'assemblage des deux plaques d'extrémité (20, 22) dans la région du raccordement d'entrée/sortie et
**en ce que** chaque pièce d'insert (42, 52, 54) encercle à la fois les portions tubulaires d'entrée et de sortie (35, 36).

2. Échangeur thermique (10) selon la revendication 1, **caractérisé en ce que** lesdites plaques d'extrémité (20, 22) ont des protubérances tubulaires (44, 46) définissant lesdites portions tubulaires d'entrée et de sortie (35, 36) et **en ce que** ladite pièce d'insert (42) est annulaire et raccordée aux deux plaques d'extrémité (20, 22) d'une manière hermétiquement étanche.

3. Échangeur thermique (10) selon la revendication précédente, **caractérisé en ce que** ladite pièce d'insert (42) est formée par laminage.

4. Échangeur thermique (10) selon la revendication 1, **caractérisé en ce qu'**il comprend au moins deux pièces d'insert (52, 54), une première pièce d'insert (52) étant fixée à une première plaque d'extrémité (20) et une seconde pièce d'insert (54) étant fixée à une seconde plaque d'extrémité (22) d'une manière hermétiquement étanche, lesdites pièces d'insert (52, 54) étant raccordés l'une à l'autre de manière hermétiquement étanche.

5. Échangeur thermique (10) selon la revendication 4, **caractérisé en ce que** chaque pièce d'insert (52, 54) a une portion de raccordement d'entrée et de sortie, ladite portion de raccordement d'entrée encerclant ladite portion tubulaire d'entrée (35) et ladite portion de raccordement de sortie encerclant ladite portion tubulaire de sortie (36).

6. Échangeur thermique (10) selon la revendication 4 ou 5, **caractérisé en ce que** chaque pièce d'insert (52, 54) est insérée dans une protubérance axiale (56) de la plaque d'extrémité correspondante (20, 22).

7. Échangeur thermique (10) selon la revendication 6, **caractérisé en ce que** ladite protubérance axiale (56) n'est pas en contact avec la plaque d'extrémité opposée (20, 22).
